Europäisches Patentamt

European Patent Office

Office européen des brevets

(11) Veröffentlichungsnummer: **0 023 247**
**A1**

(12) **EUROPÄISCHE PATENTANMELDUNG**

(21) Anmeldenummer: 80102960.4

(22) Anmeldetag: 28.05.80

(51) Int. Cl.³: **H 02 B 13/02**
**H 01 H 31/28**

(30) Priorität: 25.07.79 DE 2930075

(43) Veröffentlichungstag der Anmeldung:
04.02.81 Patentblatt 81/5

(84) Benannte Vertragsstaaten:
CH FR GB IT LI SE

(71) Anmelder: BROWN, BOVERI & CIE Aktiengesellschaft
Mannheim
Kallstadter Strasse 1
D-6800 Mannheim Käfertal(DE)

(72) Erfinder: Bleidt, Rolf, Ing.grad.
Reinhardstrasse 35
D-6460 Gelnhausen 2(DE)

(72) Erfinder: Neumaier, Heinrich, Ing. grad.
Fuhrstrasse 50
D-6450 Hanau(DE)

(74) Vertreter: Kempe, Wolfgang, Dr. et al,
c/o BROWN, BOVERI & CIE AG Kallstadter Strasse 1
D-6800 Mannheim-Käfertal(DE)

(54) **Trennschalter.**

(57) Ein Trennschalter, insbesondere ein metallgekapselter $SF_6$-gas-isolierter Hochspannungs-Trennschalter besitzt mindestens ein von einer Antriebswelle drehungsangetriebenes Kontaktmesser, das im eingeschalteten Zustand mit dem Festkontaktstück des von der Sammelschiene kommenden Zugangs-Stromleiters stromleitend verbunden ist, das bzw. die Kontaktmesser (20, 22, 24) steht bzw. stehen jeweils über ortsfeste Kontaktelemente (32, 34, 36) mit dem zum Leistungs- oder Sicherheitsschalter (2) führenden Abgangs-Stromleiter (14, 16, 18) in ständiger stromleitender Verbindung. Als Kontaktelemente werden sogenannte Multikontakt-Buchsen (32, 34, 36) verwendet, die jeweils zwischen einer Lagerbuchse (21, 23, 25) des Kontaktmessers (20, 22, 24) und einer Lagerbuchse (13, 15, 17) des zum Leistungs- oder Sicherheitsschalter (2) führenden Abgangsstromleiters kontaktführend gelagert und koaxial um die IsolierAntriebswelle (19) angeordnet sind.

.../...

Croydon Printing Company Ltd.

Fig. 1

BROWN, BOVERI & CIE AKTIENGESELLSCHAFT
Mannheim                  24. Juli 1979
Mp.-Nr. 597/79          ZFE/P4-Gü/Ht

"Trennschalter"

Die Erfindung betrifft einen Trennschalter, insbesondere metallgekapselter $SF_6$-gasisolierter Hochspannungs-Trennschalter, mit mindestens einem von einer Antriebswelle drehungsangetriebenen Kontaktmesser, das im eingeschalteten Zustand mit dem Festkontaktstück des von der Sammelschiene kommenden Zugangs-Stromleiters stromleitend verbunden ist.

Üblicherweise sind solche Kontaktmesser mit zwei diametral gegenüberliegenden Kontaktarmen ausgebildet, die gemeinsam von der Antriebswelle verschwenkbar sind. Jeder Kontaktarm steht im eingeschalteten Zustand jeweils mit dem Festkontaktstück der Phasenleiter für die Stromzuführung einerseits der Antriebswelle und die Stromabführung andererseits der Antriebswelle in Verbindung. Jedes Kontaktmesser führt bei einem Schaltvorgang somit zwei Kontaktverbindungen herbei. Auch räumlich hat diese Konstruktion den Nachteil, daß diese einen höheren, nämlich den doppelten Platzbedarf wie ein nur einarmiges Kontaktmesser hat.

Der Erfindung liegt die Aufgabe zugrunde, ein Kontaktmesser der eingangs bezeichneten Gattung mit einfachen Mitteln zu schaffen, das sowohl konstruktiv einfacher gestaltet ist und einen geringeren Platzbedarf hat, als auch funktionell einfacher und damit betriebssicherer ist, indem für einen Schaltvorgang auch jeweils nur eine Kontaktverbindung bzw. Lösung benötigt werden.

Erfindungsgemäß wird diese Aufgabe dadurch gelöst, daß das bzw. die Kontaktmesser jeweils über ortsfeste Kontaktelemente mit dem zum Leistungs- oder Sicherheitsschalter führenden Abgangs-Stromleiter in ständiger stromleitender Verbindung stehen, wobei in einer vorteilhaften Ausgestaltung des Erfindungsgegenstandes vorgesehen ist, daß die Kontaktelemente von Multikontakt-Buchsen gebildet sind, die jeweils zwischen einer Lagerbuchse des Kontaktmessers und einer Lagerbuchse des zum Leistungs- oder Sicherheitsschalter führenden Abgangs-Stromleiters kontaktführend gelagert und koaxial um die Isolier-Antriebswelle angeordnet ist.

Der zweite Kontaktarm eines Kontaktmessers wird hier also durch die ständige Kontaktverbindung des Kontaktmessers mit dem Leistungs- oder Sicherungsschalter mittels der Multikontakt-Buchse überflüssig gemacht. Außerdem wird naturgemäß eine wesentliche Raumeinsparung durch den Wegfall des einen Kontaktmesserarms erzielt.

Damit ist gleichzeitig auch die Möglichkeit geschaffen, daß zur Anpassung an die verschiedenen möglichen Schaltungen einer Anlage mit zwei in einer Kapsel untergebrachten Sammelschienen und mit drei in jeder Sammelschiene angeordneten Phasenleitern vorgesehen sein kann, daß auf der Antriebswelle drei Kontaktmesser angeordnet sind, die mit den Festkontakten der von der Sammelschiene A oder B kommenden Phasenleiter verbindbar sind.

Bei einem Schalter mit sternförmig angeordneten Phasenleitern einer Sammelschiene kann vorgesehen sein, daß die Festkontaktstücke der drei Phasenleiter mit je einem etwa L-förmigen Zwischenstück ausgebildet sind. Auch diese Maßnahme ist erst durch die erfindungsgemäße einarmige Ausbildung der Kontaktmesser mit Multikontakt-Buchsen ermöglicht worden.

Nachfolgend sind Ausführungsbeispiele der Erfindung anhand beiliegender Zeichnung näher beschrieben.

Es zeigen:

Figur 1    eine Schaltanlage mit dem erfindungsgemäßen Trennschalter,

Figur 2    eine vergrößerte Ansicht des in Fig. 1 gezeigten Trennschalters 4,

Figur 3        einen Schnitt entlang I-I in Fig. 2,

Figur 4        eine andere Ausführungsform des Trennschalters und

Figur 5        einen Schnitt entlang II-II in Figur 4.

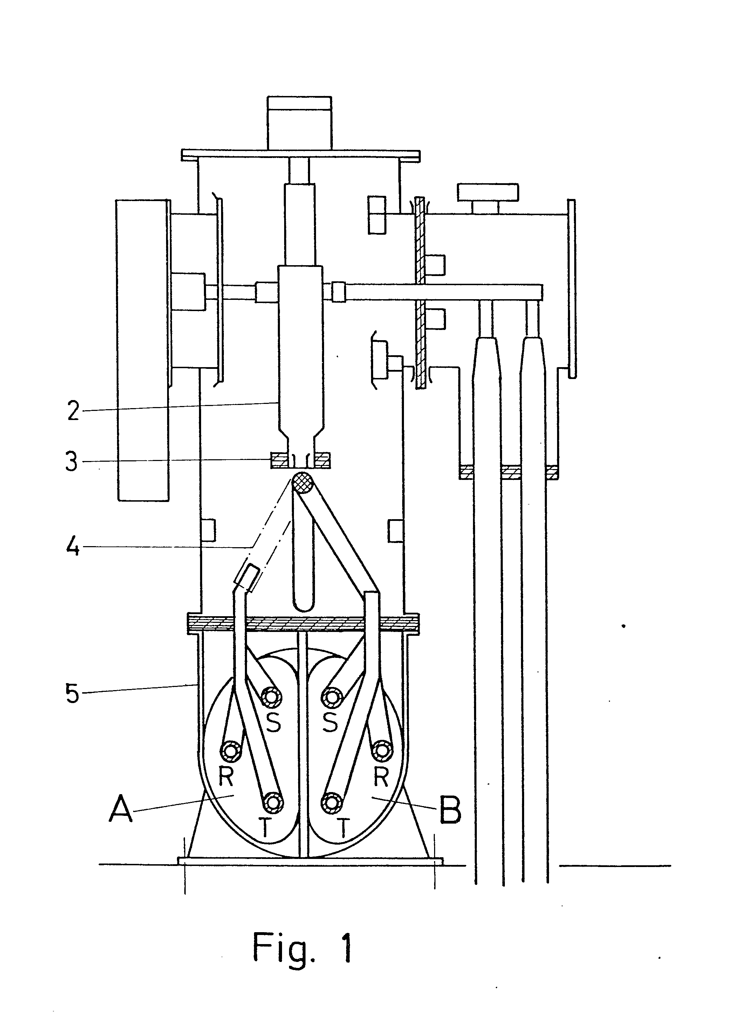

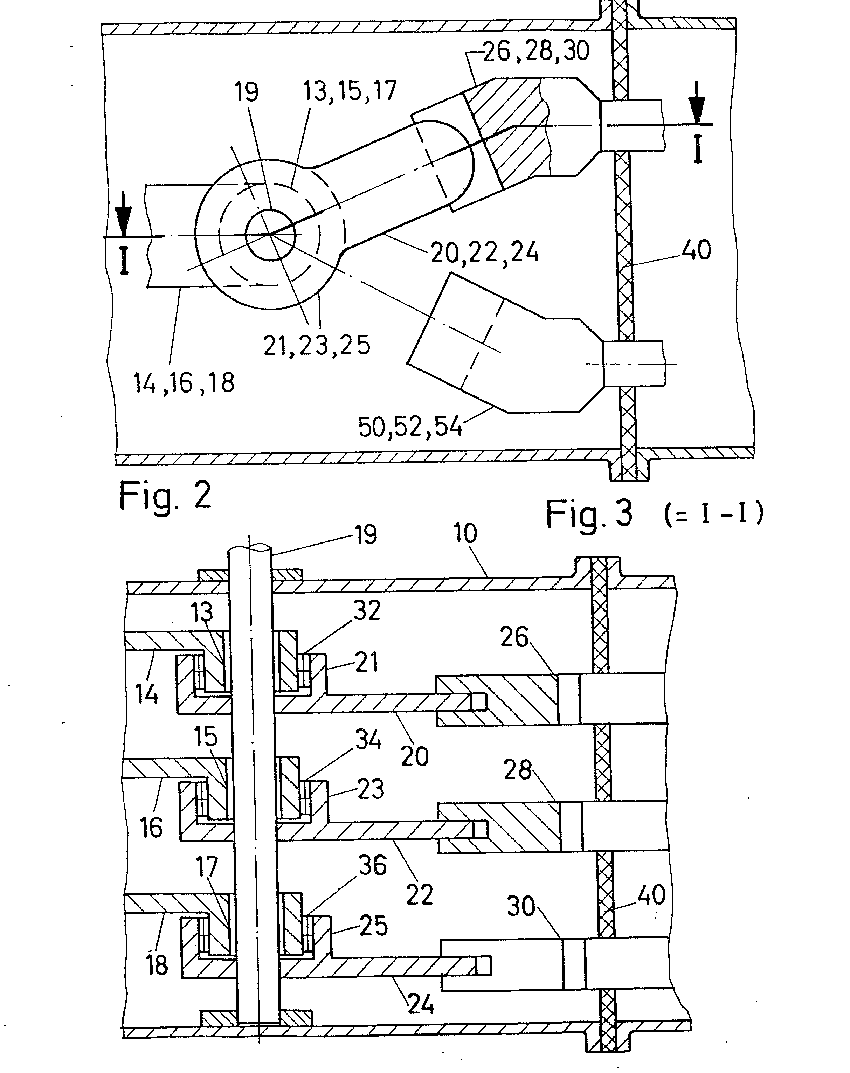

Der allgemein mit 4 bezeichnete, in den Figuren 2 bis 5 vergrößert gezeigte Trennschalter weist eine Isolier-Antriebswelle 19 auf, auf welcher drei Kontaktmesser 20,22,24 mittels je einer Lagerbuchse 21,23,25 drehbar gelagert sind. Als Lager dienen Multikontakt-Buchsen 32,34,36, die ihrerseits auf Lagerbuchsen 13,15,17 gelagert sind. Leztere stehen über die Stromabgänge 14,16,18 mit dem Leistungs- oder Sicherheitsschalter 2 der Anlage in Verbindung. Die Kontaktmesser 20,22,24 sind mit der Antriebswelle 19 kraftschlüssig verbunden und stehen über die Multikontakt-Buchsen 32,34,36 und den Stromabgängen 14,16,18 mit dem Leistungsschalter 2 in ständiger kontaktführender Verbindung. Die Kontaktmesser 20,22,24 sind je nach Schaltung entweder mit den Kontaktstücken 26,28,30 der drei Phasenleiter R,S,T der Sammelschiene B oder mit den Kontaktstücken 50,52,54 der drei Phasenleiter R,S,T der Sammelschiene A in Verbindung bringbar (Fig. 1,2,3).

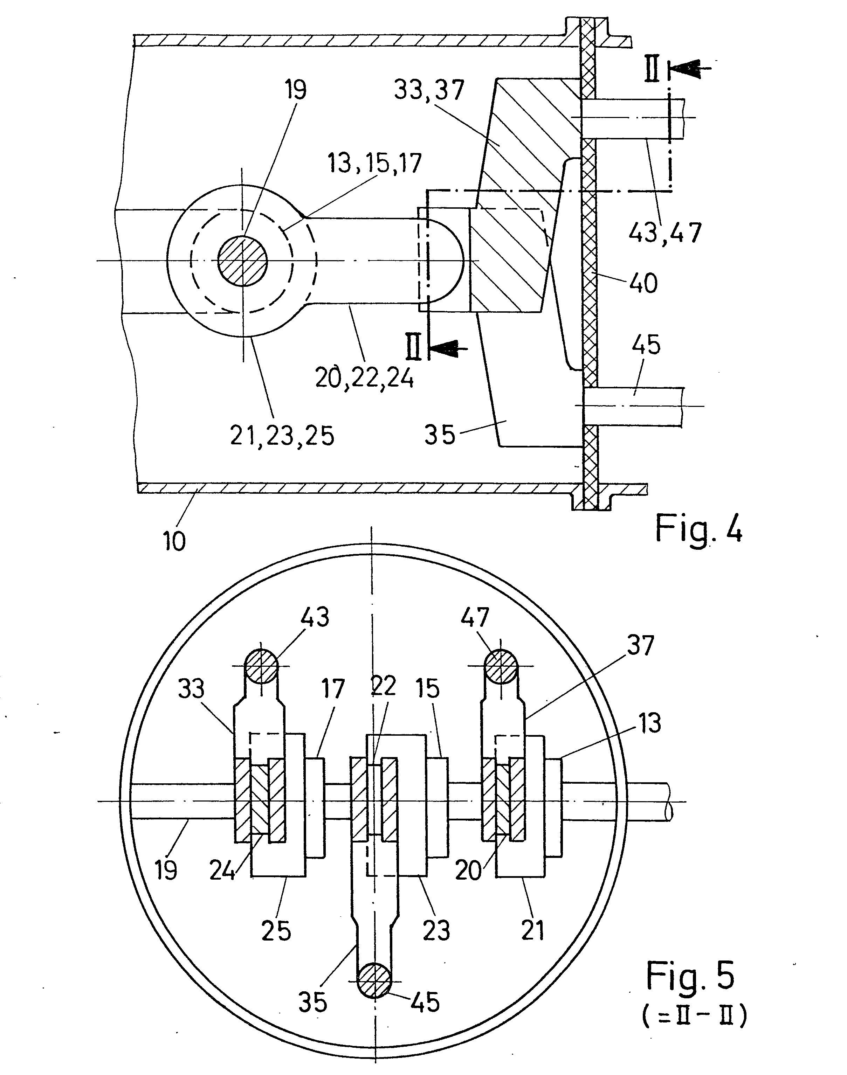

Bei sternförmiger Anordnung der drei Phasenleiter 43,45,47 eines Sammelschienensystems (Fig. 5) sind die Kontaktstücke 33,35,37 L-förmig ausgebildet, derart, daß die gabelförmig ausgebildeten, mit den Kontaktmessern 20,22,24 zusammenwirkenden Enden der Kontaktstücke 33,35,37 auf einer Ebene liegen (Fig. 4,5).

A n s p r ü c h e

1. Trennschalter, insbesondere metallgekapselter SF$_6$-gas-isolierter Hochspannungs-Trennschalter mit mindestens einem von einer Antriebswelle drehungsangetriebenen Kontaktmesser, das im eingeschalteten Zustand mit dem Festkontaktstück des von der Sammelschiene kommenden Zugangs-Stromleiters stromleitend verbunden ist, dadurch gekennzeichnet, daß das bzw. die Kontaktmesser (20,22,24) jeweils über ortsfeste Kontaktelemente (32,34,36) mit dem zum Leistungs- oder Sicherheitsschalter (2) führenden Abgangs-Stromleiter (14,16,18) in ständiger stromleitender Verbindung stehen.

2. Schalter nach Anspruch 1, dadurch gekennzeichnet, daß die Kontaktelemente von Multikontakt-Buchsen (32,34,36) gebildet sind, die jeweils zwischen einer Lagerbuchse (21,23,25) des Kontaktmessers (20,22,24) und einer Lagerbuchse (13,15,17) des zum Leistungs- oder Sicherheitsschalter (2) führenden Abgangs-Stromleiters kontaktführend gelagert und koaxial um die Isolier-Antriebswelle (19) angeordnet ist.

3. Schalter nach Anspruch 1, dadurch gekennzeichnet, daß die Lagerbuchse (21,23,25) des Kontaktmessers (20,22,24) mit der Antriebswelle (19) kraftschlüssig verbunden ist.

4. Schalter nach Anspruch 1 mit drei in je einer Sammelschiene (A und B) angeordneten Phasenleitern, dadurch gekennzeichnet, daß auf der Antriebswelle (19) drei Kontaktmesser (20,22,24) angeordnet sind, die mit den Festkontakten (26,28,30 oder 50,52,54)/von der Sammelschiene A oder B der kommenden Phasenleiter verbindbar sind (Fig. 1).

5. Schalter nach Anspruch 1 und 2 mit sternförmiger Anordnung der drei Phasenleiter einer Sammelschiene, dadurch gekennzeichnet, daß die Festkontaktstücke der drei Phasenleiter (43,45,47) mit je einem etwa L-förmigen Zwischenstück (33,35,37) ausgebildet sind (Fig. 4 und 5).

Fig. 1

0023247

26,28,30

19    13,15,17

20,22,24

40

21,23,25

14,16,18

50,52,54

**Fig. 2**

**Fig. 3**  ( = I – I )

19        10

13        32

14            21

15        34

16            23

17        36

18            25

26

28

30        40

20

22

24

I

I

0023247

Fig. 4

Fig. 5
(= II - II)

Europäisches
Patentamt

**EUROPÄISCHER RECHERCHENBERICHT**

| EINSCHLÄGIGE DOKUMENTE | | - | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| | GB - A - 921 468 (ZAVODY JULIA FUCIKA)<br><br>* Seite 1, Zeilen 12-34; Seite 2, Zeilen 28-87 *<br>--- | 1,4 | H 02 B 13/02<br>H 01 H 31/28 |
| | DE - C - 737 085 (HEEMAF)<br><br>* Seite 4, Zeilen 1-33, 62-64 *<br>--- | 2,3 | |
| A | FR - A - 2 076 401 (COQ FRANCE)<br><br>* Anspruch 2 *<br>--- | 1 | RECHERCHIERTE SACHGEBIETE (Int. Cl.) |
| A | DE - A - 1 096 997 (LICENTIA PATENT) | | H 02 B 13/02<br>H 01 H 31/28<br>H 01 H 31/16 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27. Oktober 1980 | DAILLOUX |

EPA form 1503.1 06.78